# EUROPÄISCHE PATENTSCHRIFT

(11) **EP 1 084 462 B1**
(45) Veröffentlichungstag und Bekanntmachung des Hinweises auf die Patenterteilung: **18.02.2004**
(21) Anmeldenummer: 98950086.3
(22) Anmeldetag: 28.09.1998
(51) Int. Cl.: G05D 7/00, G05B 11/32, G05B 1/06, G05B 21/00, G05B 19/42, G05B 11/00

(54) **VERFAHREN ZUR HOCHPRÄZISEN OPTISCHEN DISTANZMESSUNG MITTELS EINER REGELBAREN PUNKTLICHTQUELLE UND MEHRKANALIGEN CCD-SENSORANORDNUNGEN AUF DER BASIS OPTISCHER TRIANGULATION UND PUNKTWEISER ABTASTUNG, INSBESONDERE ZUM BERÜHRUNGSLOSEN VERMESSEN VON DREIDIMENSIONALEN OBJEKTEN**
METHOD FOR HIGH PRECISION OPTICAL DISTANCE MEASUREMENT USING AN ADJUSTABLE POINT LIGHT SOURCE AND MULTI-CHANNEL CCD SENSOR ARRAYS BASED ON OPTICAL TRIANGULATION AND POINT BY POINT SCANNING, ESPECIALLY CONTACTLESS MEASUREMENT OF THREE DIMENSIONAL OBJECTS
PROCEDE DE TELEMETRIE OPTIQUE DE HAUTE PRECISION MIS EN OEUVRE A L'AIDE D'UNE SOURCE LUMINEUSE PONCTUELLE REGULABLE ET D'ENSEMBLES CAPTEURS CCD MULTICANAUX, FONDE SUR LA TRIANGULATION OPTIQUE ET L'EXPLORATION POINT PAR POINT, EN PARTICULIER POUR LA MESURE SANS CONTACT D'OBJETS TRIDIMENSIONNELS

(30) Priorität: 08.05.1998 DE 19820659; 01.09.1998 DE 19839830
(43) Veröffentlichungstag der Anmeldung: 21.03.2001
(73) Patentinhaber: INTECU Gesellschaft für Innovation, Technologie und Umwelt mbH, 07554 Korbussen (DE)
(72) Erfinder: NAUSCHÜTZ, Karl-Heinz, D-07549 Gera (DE); ROSENKRANZ, Norbert, D-07552 Gera (DE); SONTAG, Alfred, D-07549 Gera (DE)
(74) Vertreter: Kruspig, Volkmar, Dipl.-Ing.
(86) Internationale Anmeldenummer: PCT/EP1998/006148
(87) Internationale Veröffentlichungsnummer: WO 1999/059044

(56) Entgegenhaltungen:
- EP-A- 0 671 679
- DE-A- 3 225 985
- DE-A- 3 941 144

## Beschreibung

Die Erfindung betrifft ein Verfahren zur hochpräzisen optischen Distanzmessung mittels einer regelbaren Punktlichtquelle und mehrkanaligen CCD-Sensoranordnungen auf der Basis optischer Triangulation und punktweiser Abtastung, insbesondere zum berührungslosen Vermessen von dreidimensionalen Objekten gemäß dem Oberbegriff des Patentanspruchs 1.

Aus der EP 0 671 679 A1 ist eine Vorrichtung und ein Verfahren zum berührungslosen Vermessen dreidimensionaler Objekte auf der Basis optischer Triangulation bekannt. Dort sendet eine Strahlungsquelle gebündelte Strahlung auf die Oberfläche eines zu vermessenden Objektes aus. Diese Strahlung wird streuend reflektiert und die Remission mittels Strahlungsdetektoren erfaßt. Durch Antriebsvorrichtungen wird nahezu die gesamte Oberfläche des zu vermessenden Objektes kontinuierlich abgetastet. Zusätzlich zur Drehung des Objektes mittels eines Drehtisches erfolgt eine Bewegung in vertikaler bzw. Z-Richtung des Abtastkopfes, welcher im wesentlichen die Strahlungsquelle und die Strahlungsdetektoren in Form von CCD-Sensoren sowie zugeordnete Optiken enthält.

Durch mehrfach vorhandene Empfängerbaugruppen, d.h. Strahlungsdetektoren und entsprechende Optiken, kann eine höhere Signalwahrheit erreicht werden. Dies dient der Verbesserung der Signalsicherheit bei Remissionsproblemen, wobei zusätzlich logische Prüfalgorithmen Verwendung finden können. Die horizontale Ortsgenauigkeit bei der Meßauswertung der bekannten Vorrichtung kann durch geometrisches Ausschalten des Symmetriefehlers verbessert sowie der Absolutfehler verringert werden.

Ebenfalls aus der EP 0 671 679 A1 ist es bekannt, eine dynamische Regelung der Lichtleistung der verwendeten Strahlungsquelle, z.B. einer Laserdiode, vorzunehmen, wodurch die Deutungswahrscheinlichkeit des remittierten Lichtsignals auf den Strahlungsdetektoren und damit die Meßgenauigkeit erhöht werden kann. Gleichfalls wurde bereits vorgeschlagen, durch eine einfache, steuerbare Verlängerung der Integrationszeit der als Strahlungsdetektoren verwendeten CCD-Zeilen oder Erhöhung der Laserlichtleistungsintensität auch weit entfernte, winkelmäßig sehr ungünstige und/oder schwach reflektierende Objekte sicher zu vermessen.

Verfahren zum berührungslosen Vermessen der Außenkonturen von dreidimensionalen Objekten mittels elektromagnetischer Strahlung auf der Basis optischer Triangulation sind ebenfalls bekannt.
Hierbei befindet sich das Objekt auf einer Befestigungsvorrichtung und wird mittels einer Abtasteinheit, welche bewegbar ist, abgetastet. Das Sensorausgangssignal bei bekannten Verfahren wird mit einer entsprechenden Auswerteeinheit rechnergestützt weiterverarbeitet, um entsprechende Informationen über die Objektoberflächenentfernung zu erhalten, so daß hieraus dreidimensionale, digitale Daten gewonnen werden können. Diese Daten werden dann abgespeichert, um anschließend für 3D-Bildbearbeitungssysteme, z.B. zur Steuerung einer numerischen Werkzeugmaschine, zur Verfügung zu stehen.

Bei der optischen Distanzmessung mit CCD-Sensoren erfolgt demnach eine punktweise Digitalisierung, d.h. eine dynamische Meßwerterfassung, bei der externe Taktzyklen zum Erhalt einer Ortszuweisung bezüglich der auf den CCD-Sensoren abgebildeten Strahlung erforderlich sind. Wie in der EP 0 671 679 A1 gezeigt, kommen zwei oder mehrere optische Empfangskanäle zum Einsatz, um auch kritische Objekte umfassender digitalisieren zu können sowie Meßfehler an optischen oder räumlichen Kanten zu kompensieren.

Es hat sich jedoch gezeigt, daß aufgrund von Remissionsschwankungen am Meßobjekt, durch Oberflächenstrukturen des Meßobjektes, welche mehrfache oder zerklüftete Meßimpulse erzeugen, durch Fehler an optischen und räumlichen Kanten sowie mechanisch-optische Toleranzen der Meßkanäle unzuverlässige Distanzmessungen resultieren, so daß die Meßergebnisse selbst den abzubildenden Gegenstand nicht ausreichend genau beschreiben. Weitere Schwierigkeiten beruhen auf einer Temperaturgängigkeit und einer nicht ausreichenden Stabilität externer Taktzyklen mit nachteiligen Belichtungszeitänderungen an den verwendeten CCD-Sensoren.

Die genannten Nachteile bekannter Lösungen sind komplex und treten mit unterschiedlicher zeitlicher Dynamik auf. Auch bei sorgfältiger Montage von entsprechenden Meßanordnungen, welche in Abhängigkeit von zu stellenden Meßobjekten durchaus große Abmessungen aufweisen können, sind Toleranzen zwischen den Kanälen nicht zu vermeiden. Ein entsprechender Abgleich des mechanisch-optischen Teils ist nicht oder nur mit äußerst großem Aufwand realisierbar.

Es ist daher Aufgabe der Erfindung, ein Verfahren zur hochpräzisen optischen Distanzmessung mittels einer regelbaren Punktlichtquelle und mehrkanaligen CCD-Sensoranordnungen auf der Basis optischer Triangulation und punktweiser Abtastung, anzugeben, das in der Lage ist, hochkomplizierte Meßobjekte auch unterschiedlicher Remissionseigenschaften und komplizierter Oberflächenstrukturen sicher abzutasten, wobei die erhaltenen Meßdaten durch die interne Auswertung und Selektion zwischen den Kanälen ohne aufwendigen mechanisch-optischen Abgleich repräsentativ und wiederholbar sind.

Die Lösung der Aufgabe der Erfindung erfolgt mit einem Verfahren in seiner Definition gemäß der Lehre nach Patentanspruch 1, wobei die Unteransprüche mindestens zweckmäßige Ausgestaltungen und Weiterbildungen umfassen.

Mittels des vorgestellten Verfahrens werden die beim Stand der Technik gegebenen Fehlerquellen weitgehend ausgeschaltet, ohne daß ein erhöhter Aufwand bei der Montage oder Justierung einer entsprechenden Meßanordnung erforderlich wird.
Erfindungsgemäß wird ausgehend von einer punktweisen Meßwerteerfassung eine Prüfung der Meßbedingungen für jeden Meßkanal vorgenommen, wobei als kritisch oder nicht repräsentativ bewertete Messungen von einer weiteren Verarbeitung ausgeschlossen oder dementsprechend markiert werden. Mittels einer zentralen Steuereinheit kann eine exakte simultane Meßdatenerfassung vorgenommen werden, so daß die in den zugehörigen CCD-Sensorkanälen aufgenommenen Werte direkt ausgewertet werden können. Eine Kompensation der Meßfehler oder ein Verwerfen der Daten am oder im als kritisch erkannten Kanal kann leicht erfolgen. Mit dem Ziel der Reduzierung der insgesamt zu verarbeitenden oder abzuspeichernden Datenmenge werden fehlerfreie Meßdaten der einzelnen Kanäle zusammengefaßt.

Demnach wird mit dem Verfahren zunächst unter Rückgriff auf die zentrale Steuereinheit eine simultane Erfassung der Meßwerte eines Meßpunktes in allen Kanälen vorgenommen, die einen vorgebbaren Schwellwert überschreiten. Diese Meßwerte repräsentieren dann einen lokalen Meßimpuls-Anfangswert, wobei die folgenden oder umliegenden Informationen je einen Meßimpuls angeben. Die Meßimpulse werden einer Impulsbewertung zugeführt. Diese Impulsbewertung umfaßt die Analyse der Impulsform, der Impulsamplitude, der Impulsbreite und die Untersuchung auf das Vorliegen von unerwünschten oder unzulässigen Mehrfachimpulsen oder dergleichen.

Verfahrensseitig werden dann die Meßimpulse einer Impulslokalisierung unterzogen, um dann, wie oben dargelegt, nur solche Meßimpulse, die gegebenen Prüfkriterien entsprechen, zusammenzuführen und um gemittelte Meßdaten zur externen Datenspeicherung und Weiterverarbeitung auszugeben.

Zum Erreichen einer zeit- und ortssynchronen Punktvermessung wird von der zentralen Steuereinheit gemäß einer speziellen Ausführungsform der Erfindung ein gemeinsamer Steuertakt für die CCD-Sensoranordnungen, abgeleitet von externen Impulsen, generiert und bereitgestellt. Hier besteht die Möglichkeit, im Falle des Nichtvorhandenseins der extern generierten Impulse oder beim Überschreiten vorgebbarer Impulszykluszeiten auf eine interne Taktung der CCD-Sensoranordnungen umzuschalten, so daß bis dahin erhaltene, positiv bewertete Meßdaten nicht verworfen werden müssen.

Gemäß einer Ausgestaltung des Verfahrens wird die Regelung der Lichtleistung der Punktlichtquelle derart weitergebildet, daß pro CCD-Sensoranordnungskanal Komparatoren zum Vergleich mit einem oberen oder unteren empfangenen Leistungsschwellwert vorgesehen sind. Erfindungsgemäß werden die Vergleichsdaten in je einem getakteten Register (Latch) abgespeichert, wobei ausgangsseitig dieser Register eine Logikbaugruppe vorgesehen ist, die ein Aufwärts-, Abwärtszähl- oder Stopsignal für einen nachgeordneten Zähler bildet. Der Zähler stellt dann mit einer vorgegebenen, vorzugsweise nichtlinearen Schrittfolge ein Regelsignal für die Ansteuerbaugruppe der Punktlichtquelle bereit.
Bevorzugt entspricht die Schrittfolge einer logarithmischen oder Exponentialfunktion.

Durch die Vorsorge bei Ausfall der extern generierten Impulse für die CCD-Taktung und die Regelung der Lichtleistung der Punktlichtquelle werden sowohl die CCD-Sensoren geschützt als auch die Lichtmenge beim Meßvorgang in Abhängigkeit von sich ändernden Oberflächeneigenschaften der Meßobjekte und/oder sich ändernden Meßbedingungen optimiert. Darüber hinaus besteht die Möglichkeit, durch Einsatz eines Multiplexers mit entsprechenden Umschaltmöglichkeiten die Lichtleistung auf einen gesundheitsunschädlichen Wert herabzuregeln für den Fall, daß z.B. Justierarbeiten dann notwendig werden, wenn als Punktlichtquelle ein Laser Verwendung findet.

Die erfindungsgemäße Lichtregelung stellt eine Dreipunktregelung dar, wobei die Register von den Signalen für die Steuerung der CCD-Sensoren getaktet werden. Die erwähnte Logikbaugruppe kann weiterhin beim Umschalten von einem Safe-Zustand auf Lichtregelung einen Anfangswert bereitstellen und ermöglicht das Ausblenden eines Kanals aus dem Regelungsprozeß dann, wenn von einem Kanalcontroller ein fehlerhafter Kanal selektiert wurde.

Mittels des einzusetzenden Up-Down-Zählers ist in Verbindung mit der Möglichkeit, nichtlinear progammierte Schritt folgen vorzusehen, die Regelung beschleunigbar, so daß die Regeleigenschaften verbessert werden. Vorzugsweise besitzt der Zähler einen Eingang zum Setzen eines vorgebbaren Anfangswertes. Separate Sensoren zur Bestimmung der Lichtleistung sind durch Rückgriff auf die Nutzsignale der CCD-Sensoren, die für die eigentliche Signalauswertung bestimmt sind, nicht erforderlich. Dadurch, daß über den Kanalcontroller unter Beachtung der Ergebnisse von Schwellwertdetektoren laufend der günstigste Meßkanal für die Regelung ausgewählt werden kann, ist sichergestellt, daß pro Meßzyklus eine größtmögliche Anzahl verwertbarer Meßdaten erhalten wird.

Der erwähnte Kanalcontroller dient dem Ausblenden von kritischen Meßkanälen oder eines kritischen Meßkanals, so daß dieser beim Meßprozeß bzw. der Meßwertbildung oder der Lichtleistungsregelung unberücksichtigt bleibt. Die Selektion fehlerhafter Meßkanäle erfolgt durch eine Impulsbewertung und Zuordnung möglicher Fehlerbits, so daß die zu verarbeitende Signalmenge auf tatsächlich verwertbare Informationen beschränkt bleibt.

Bevorzugt werden die Meßdaten korrigiert und/oder linearisiert, indem zuordenbare Werte aus einer Look-Up-Tabelle ausgelesen werden. Hierdurch läßt sich sowohl eine Anpassung an Maßeinheiten als auch eine Vereinfachung der nachgeschalteten Bildverarbeitung aufgrund der zur Verfügung gestellten Datenmenge erreichen.

Ebenfalls durch Berücksichtigung einer weiteren Look-Up-Tabelle kann eine Autofokussteuerung für die Punktlichtquelle realisiert werden.

Die zur Durchführung des Verfahrens notwendige zentrale Steuereinheit kann in einer bevorzugten Ausführungsform mit einem Microcontroller in Master-Slave-Anordnung wechselwirken, wobei die zentrale Steuereinheit als Master dient. Durch den Microcontroller werden mindestens Teile der Impulsbewertung und - lokalisierung durchgeführt.

Bei dieser Ausführungsform wird eine Digitalisierung der Ausgangssignale der CCD-Sensoranordnungen vorgenommen, wobei im Sinne einer Verbesserung des Signal-Rausch-Verhältnisses nur diejenigen Signale einer Wandlung unterzogen werden, welche eine programmierbare Abtastschwelle überschreiten.

In der Ausführungsform mit Microcontroller dient eine Datentransfereinheit der Reduzierung der Controller-Operationszeiten durch Erzeugung von Impulsflankenwerten für die Meßimpulse der Kanäle sowie deren Ablage in definierte Adreßbereiche nach Abschluß der jeweiligen CCD-Transporttaktzyklen in einen entsprechenden Datenspeicher. Die zur Festwertberechnung erforderliche Datenmenge kann unter Beachtung meßsignalrelevanter Bereiche reduziert werden. Der Microcontroller kann auch dadurch entlastet werden, daß in jedem CCD-Kanal ein Multiplexer ausgebildet ist, welcher ein Zeitsplitten zwischen digitalisierten Meßwerten und dem in einem Register gespeicherten Anfangswert bewirkt, wodurch dieser am Ende der Messung als Meßimpulsadresse auf eine feste Adresse des Datenspeichers transferiert wird.

Mittels des vorstehend beschriebenen Verfahrens kann die punktweise Meßwerterfassung optimiert werden, indem Meßbedingungen in jedem Meßkanal und für jeden einzelnen Meßpunkt überprüft werden. Diese Überprüfung schließt den Ausschluß kritischer oder als untauglich bewerteter Messungen ein, so daß der Aufwand für eine nachgeschaltete weitere Datenabspeicherung und -verarbeitung gesenkt werden kann. Eine zentrale Steuereinheit stellt einen Steuertakt für die CCD-Sensoranordnungen zur zeit- und ortssynchronen Punktmessung bereit, wobei dieser Steuertakt von externen Impulsen abgeleitet wird. Hierdurch sind die in den zugehörigen CCD-Sensor-Empfangskanälen aufgenommenen Werte direkt auswertbar und es kann eine Meßkanalselektion nach vorgegebenen Bewertungs- oder Empfangskriterien erfolgen. Es ist also auf der Basis der simultanen Meßdatenerfassung und -bewertung eine Kompensation der Meßfehler oder aber auch ein Verwerfen der Daten am oder aus dem kritischen Kanal möglich.

Die Erfindung soll nachstehend anhand von Ausführungsbeispielen sowie unter Zuhilfenahme von Figuren näher erläutert werden.

Hierbei zeigen:
- Fig. 1: eine Prinzipdarstellung einer Anordnung zur Durchführung des Meß- und Auswerteverfahrens;
- Fig. 2: ein Blockschaltbild eines Meßkopfes zur Durchführung des Verfahrens ohne separaten Microcontroller;
- Fig. 3: ein Blockschalt ähnlich Fig. 2, jedoch mit einem Microcontroller (CPU), welcher im Master-Slave-Verfahren mit der zentralen Steuereinheit wechselwirkt;
- Fig. 4: ein Blockschaltbild des Datentransfers in den Microcontroller bzw. die CPU;
- Fig. 5: eine prinzipielle Darstellung der Lichtleistungsregelung; und
- Fig. 6: ein Impulsdiagramm bzw. Taktschema mit Darstellung der Steuerung der Integrationszeit der CCD-Sensoren nach dem Stand der Technik einerseits und einer verbesserten Ausführungsform andererseits.

Die mit Hilfe der oben genannten Figuren beschriebene Vorrichtung zur Durchführung eines Verfahrens zur hochpräzisen optischen Distanzmessung geht von einer Kombination der Merkmale Synchronsation der Kanäle, Bewertung der Kanalsymmetrie der einzelnen Messungen im Kanal zur Selektion einzelner Meßwerte und Regelung der Lichtleistung aus, um in einem festen Bitmuster und leicht auswertbar definitive Aussagen über die Qualität der Meßdaten, d.h. die Art der Fehler und den Dateninhalt ausgeben zu können.

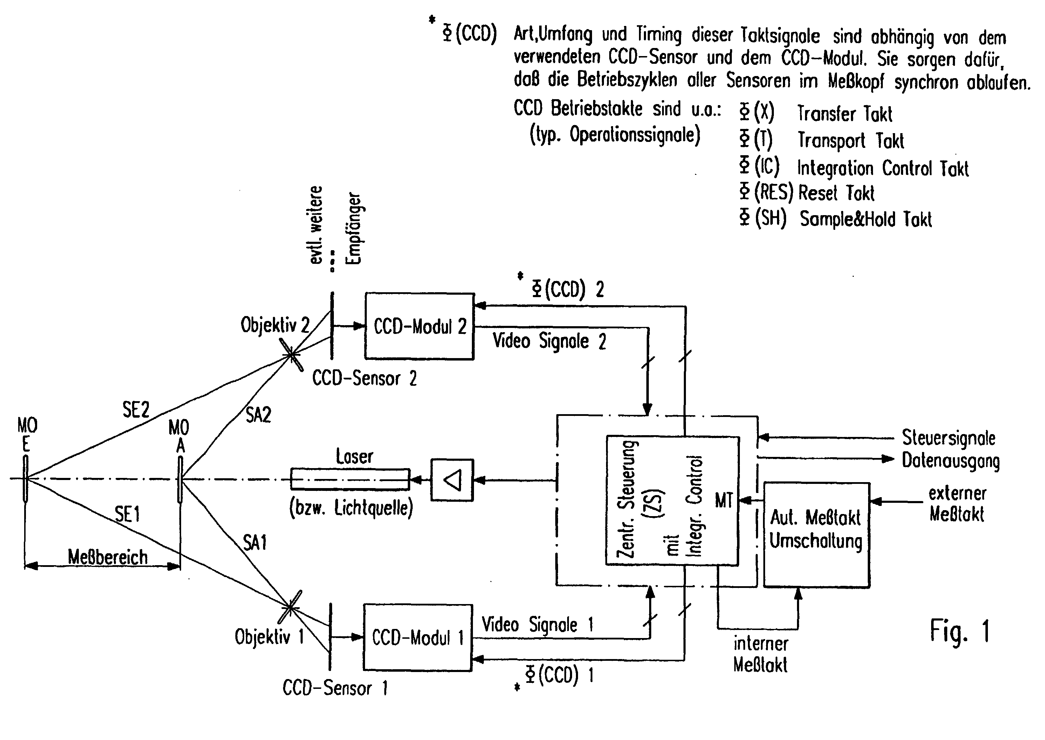

Wie in der Fig. 1 dargestellt, erfolgt die Abbildung einer von einem Objekt remittierten Strahlung über entsprechende Objektive auf je ein CCD-Modul 1 und 2, enthaltend CCD-Sensoren 1 und 2. Als Punktlichtquelle wird gemäß Fig. 1 ein Laser verwendet, welcher über einen entsprechenden Verstärker von einer Elektronik angesteuert wird. Eine zentrale Steuerung liefert ausgehend von einem externen Meßtakt und weiteren Steuersignalen Taktsignale für das jeweilige CCD-Modul 1 bzw. 2. Art und Umfang der Taktsignale für das CCD-Modul sind abhängig vom verwendeten CCD-Sensor. Mittels dieser Taktsignale können die Betriebszyklen der im Meßkopf befindlichen Sensoren synchron gestaltet werden.

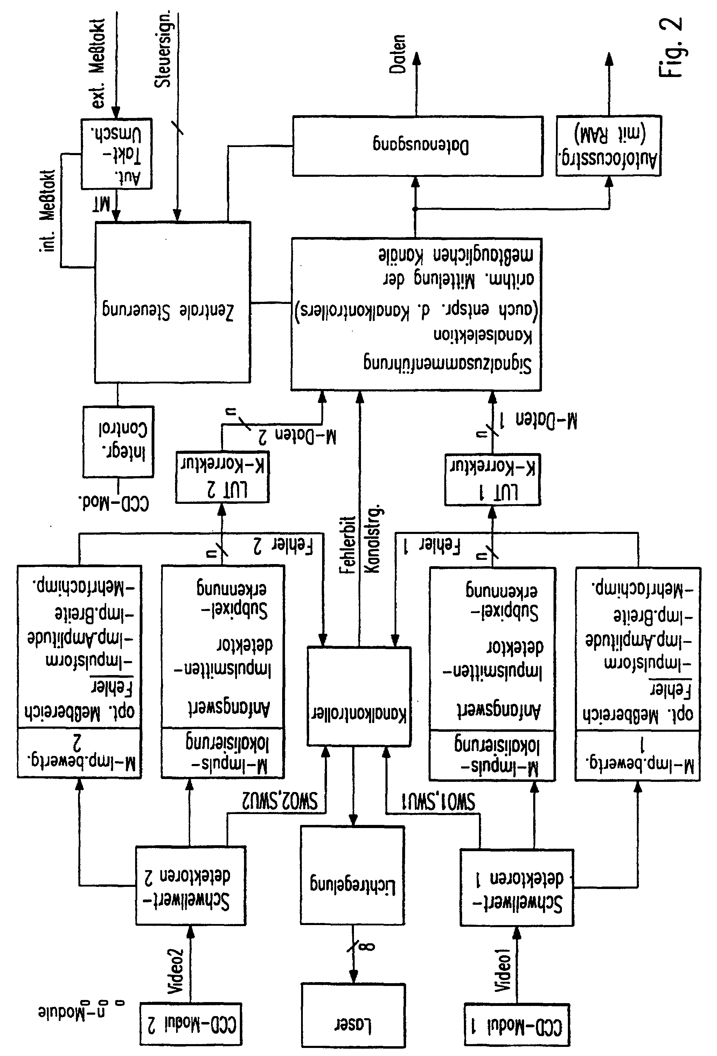

Wie in den Fig. 1 und 2 angedeutet, besteht die Möglichkeit, anstelle einer zweikanaligen Anordnung auch weitere Kanäle mit entsprechenden identischen Baugruppen vorzusehen, wenn dies unter Berücksichtigung der Meßaufgabe und/oder des Meßobjekts gewünscht wird.

Gemäß Fig. 2 gelangen die Ausgangssignale des jeweiligen CCD-Moduls auf einen Schwellwertdetektor. Die einen vorgebbaren Schwellwert überschreitenden Signale gelangen dann auf eine Baugruppe zur Meßimpulsbewertung und Meßimpulslokalisierung. Ebenfalls werden die Ausgangssignale auf einen Kanalcontroller gelegt.

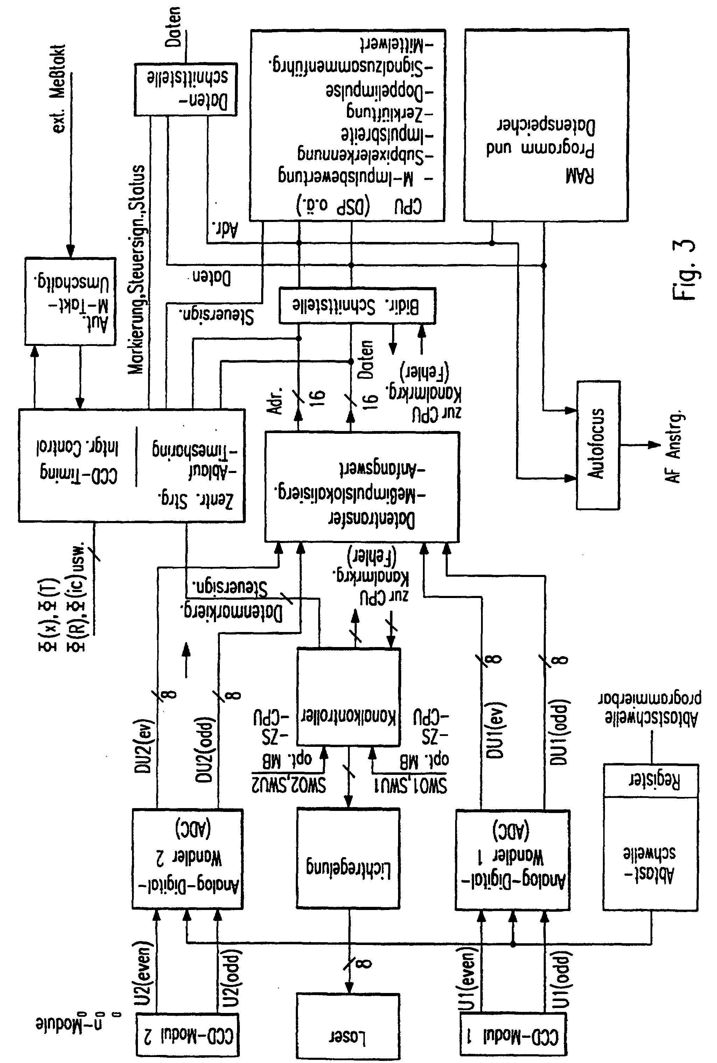

Die einzelnen Empfangskanäle werden von einer zentralen Steuerung bzw. zentralen Steuereinheit verwaltet, wobei eine Ausführungsform mit und ohne Microcontroller (CPU) gemäß den Fig. 2 oder 3 denkbar ist. Dann, wenn ein Microcontroller (Fig. 3) eingesetzt wird, kann die Impulsbewertung und die Meßimpulslageberechnung im Sinne einer höheren Auflösung effektiviert werden.

Wie aus dem Blockschaltbildern nach Fig. 2 und 3 entnehmbar, wird nur der jeweils relevante Meßimpulsinhalt und nicht der gesamte Informationsinhalt des jeweiligen CCD-Sensors ausgewertet. Diese Auswertung betrifft zum einen das kurz angerissene Selektieren der Meßimpulse mittels einer vorgebbaren Meßschwelle (Schwellwertdetektoren). Die lokale Information beim Überschreiten dieser vorgebbaren Meßschwelle durch den einlaufenden Meßimpuls wird fixiert und liefert einen Anfangswert. Die diesem Wert folgende Information enthält den eigenen Meßimpuls. Eine anschließende weitere Bewertung dient dem Erhalt einer Ortsinformation des Abbilds des vom Objekt remittierten Lichtflecks auf dem jeweiligen CCD-Sensor.

Der zentralen Steuereinheit kommt, wie dargelegt, die Aufgabe zu, die Betriebszyklen der CCD-Sensoren zu synchronisieren, so daß die Meßabläufe in den Kanälen zeitgleich erfolgen können. Insbesondere betrifft dies die Transfer-, Transport-, Integrations- und Resettakte für die CCD-Sensoren. Mit einer ebenfalls dargestellten Baueinheit zur Integrationssteuerung und zum Antiblooming, welche mit der zentralen Steuereinheit verbunden ist, können die Integrationszeiten definiert verändert und ein optisches Übersteuern der CCD-Sensoren verhindert werden.

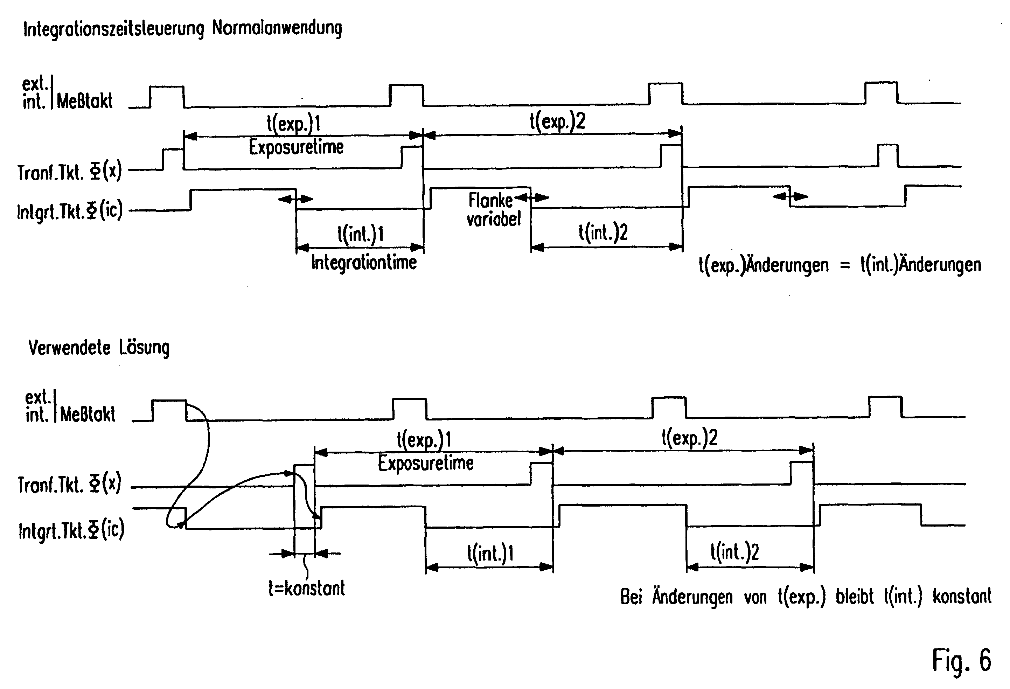

Wie in der Fig. 6 dargestellt, kann mit Hilfe dieser Baugruppe der CCD-Takt direkt von einem externen Meßimpuls abgeleitet und generiert werden. Erst nach Ablauf der Integrationszeit wird dann ein Transferimpuls bereitgestellt, welche die Integrationszeit beendet und ein Umschalten des CCD-Sensors zur Signalausgabe veranlaßt.

In dem Falle, wenn externe Transferimpulse verwendet werden, die beim Scannen eines Objektes die Ortslage verkörpern, muß davon ausgegangen werden, daß aufgrund der Kopplung dieser Transferimpulse mit mechanischen, opto-mechanischen oder elektrischen Baugruppen der Vorrichtung diese starken Schwankungen unterliegen. Hierdurch ergeben sich unerwünschte Änderungen in der Belichtungs- und damit der Integrationszeit der CCD-Sensoren, wie dies im oberen Bildteil der Fig. 6 gezeigt ist.

Nach der bevorzugten Steuerung der Integrationszeit, wie in Fig. 6 unten dargestellt, bleibt diese konstant, auch wenn sich externe Impulszyklen ändern. Hierdurch bekommt die Lichtleistungsregelung eine stabile Regeleingangsgröße unabhängig von der Belichtungszeitänderung. Außerdem können mechanische Toleranzen die Meßbedingungen nicht mehr unerwünscht beeinflussen und es können in diesen Baugruppen Stabilitätsmaßnahmen, welche in der Regel einen hohen Aufwand nach sich ziehen, entfallen.

Eine automatische Meßtaktumschaltung dient dem Schutz der CCD-Sensoren bei Ausfall der externen Meßtaktimpulse, wobei dann auf einen internen Takt umgeschaltet werden kann. Dieses Umschalten erfolgt dann, wenn die externen Impulszyklen eine definierte Zeit überschreiten oder die betreffenden Impulse, wie erwähnt, ganz ausfallen.

Im Signalweg hin zur Signalzusammenführung und zum Datenausgang sind in jedem Kanal Look-Up-Tabellen vorgesehen, um eine Korrektur der Meßkurven bei Toleranzen im optischen und mechanischen Bereich der Meßkanäle vorzunehmen und Ausgabewerte zu linearisieren bzw. eine Anpassung an unterschiedliche Maßeinheiten vorzunehmen. Eine mit einem Speicher im Sinne einer weiteren Look-Up-Tabelle versehene Autofokussteuerung dient der Bereitstellung eines an die jeweilige Peripherie angepaßten Signals einer Fokussiereinrichtung für die Lichtquelle, im gezeigten Beispiel den Laser.

Die Baugruppe zur Lichtregelung erhält Signale des Kanalcontrollers und dient der Optimierung der Lichtmenge beim Meßvorgang in Abhängigkeit von sich ändernden Oberflächeneigenschaften der Meßobjekte und/oder sich ändernden Meßbedingungen. Weiterhin kann mit dieser Lichtleistungsregelung ein Umschalten auf einen gesundheitsunschädlichen Wert bei Montageund Justagearbeiten, insbesondere beim Wechsel des Meßobjekts vorgenommen werden.

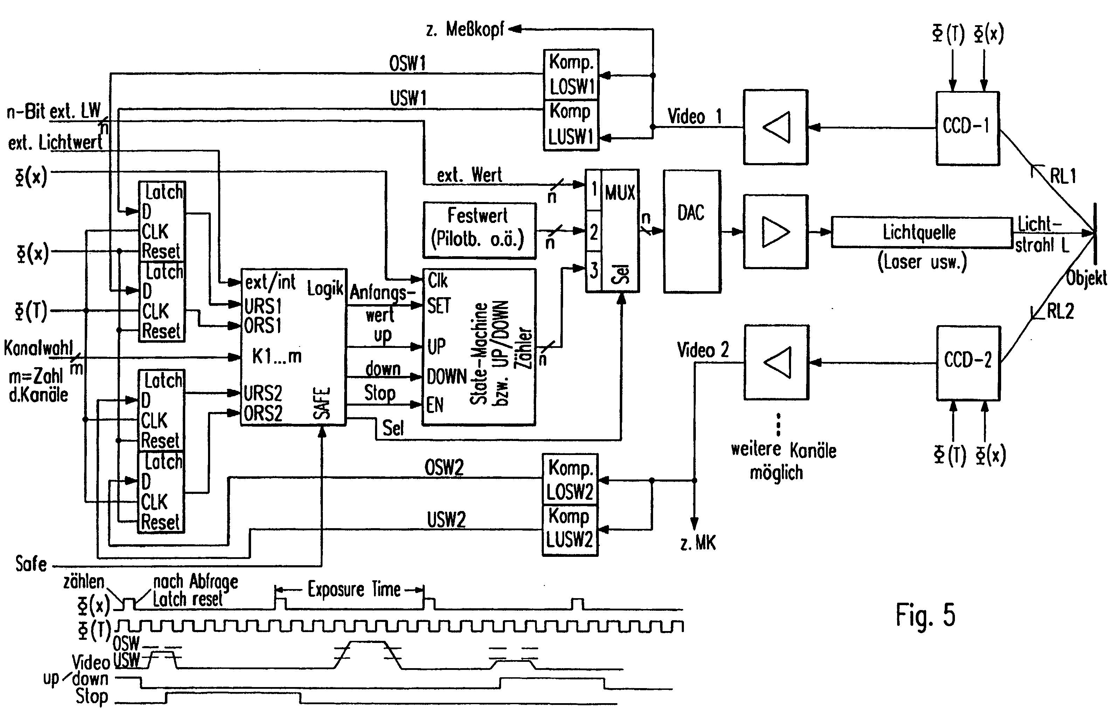

Wie im einzelnen in der Fig. 5 dargestellt, ist die Lichtleistungsregelung als Dreipunktregelung ausgeführt, wobei die Regelgrößen in jedem Empfangskanal getrennt erfaßt werden und hierfür auf Komparatoren LOSW1/2 und LUSW1/2 zurückgegriffen wird. Ausgangsseitig stehen die Komparatoren mit je einem Register (Latch) in Verbindung, welche von den sychronen Signalen φ(T) und φ(x) getaktet werden. Die Register speichern den Regelstatus für die Dauer einer Belichtungszeitperiode.

Eine Logikbaugruppe bildet entsprechend des momentanen Regelzustandes ein Aufwärts-, Abwärts- oder Stopsignal für einen Zähler bzw. eine State-Machine, die wiederum über einen Digital-Analog-Wandler (DAC) den Leistungswert der Lichtquelle über einen entsprechenden Verstärker erhöht, herabsetzt oder beibehält.

Die Logikeinheit dient darüber hinaus der Bildung eines Anfangswerts beim Umschalten von einem Sicherheitssignal auf Lichtleistungsregelung oder dem Ausblenden eines Kanals aus dem Regelprozeß gemäß der Kanalcontroller-Signalwahl. Auch stellt die Logikeinheit ein Selektsignal für einen Multiplexer (MUX) bereit.

Dieser Multiplexer (MUX) ermöglicht das Umschalten auf einen extern steuerbaren festen Lichtwert oder einen gesundheitsunschädlichen Pilotstrahl-Lichtleistungswert bei eventuellen Justierarbeiten mit Laserlichtquellen.

Der eingesetzte Up-Down-Zähler ermöglich eine Verringerung der Regelzeitkonstanten durch zweckmäßigerweise unlinear programmierte Schrittfolgen. Diese Schrittfolgen sind logarithmisch bzw. entsprechen einer Exponential-Funktion. Darüber hinaus weist der Up-Down-Zähler einen Set-Eingang für einen entsprechenden Anfangswert auf.

Der Up-Down-Zähler arbeitet demnach unlinear in seiner Schrittfolge, wodurch bezogen auf den gerade aktuellen Lichtwert konstante Lichtwertänderungen pro Regelschritt möglich sind, um das Regelverhalten im gesamten Lichtwertbereich konstant zu halten.

Die Steuerung erfolgt mit zum CCD-Sensor synchronen Taktimpulsen abgeleitet von φ(x) und φ(T). Mit Beginn und Inbetriebnahme wird ein Anfangswert gebildet, wobei die laufende Regelung auf Meßwerte zurückgreift, die von den CCD-Sensoren gewonnen werden. Unter Beachtung der Ausgangssignale des Kanalcontrollers kann eine automatische Wahl des günstigsten Meßkanals für die Regelung erfolgen.

Der in den Fig. 2 und 3 gezeigte Kanalcontroller ermöglicht ein Ausblenden von kritischen Meßkanälen oder eines kritischen Meßkanals durch Signalbildung oder Markierung, wobei das Ausblenden bezogen auf den Meßprozeß bzw. die Meßwertbildung und Meßauswertung oder bezogen auf die Lichtwertregelung erfolgt.

Zusammenfassend ermöglichen bei der Ausbildung der Vorrichtung zur Durchführung des Verfahrens ohne Microcontroller, die Schwellwertdetektoren eine Bildung der Abtastschwellen zur Impulsabtastung, das Festlegen des Regelbereichs für die Lichtregelung und die Bestimmung eines optimalen Meßbereichs zur Meßimpulsbewertung.

Die Impulslokalisierung dient der Ermittlung des Anfangswerts durch einen Zähler, welcher beim Überschreiten der Abtastschwellen den gegebenen Zählerstand zu diesem Zeitpunkt festhält, und die Ermittlung eines Meßimpulses durch Impulsbreitenbestimmung.

Im Zusammenhang mit der Impulsbreitenermittlung kann besonders vorteilhaft eine Subpixelerkennung durchgeführt werden. Hierbei wird die Meßempfindlichkeit, welche durch die inkremental auf dem CCD-Sensor jeweils angeordneten Photopixel vorgegeben ist, erhöht. Dies ist mit Hilfe eines Flip-Flops möglich, welcher so angeordnet ist, daß eine Ansteuerung von einem Zähltakt erfolgt, beginnend vom Anfangswert des Meßimpulses und alternierend zwischen ungeradzahliger und geradzahliger Photopixellänge. Am Ende des Impulses wird der Zähltakt abgeschaltet, wobei der Endzuständ des Flip-Flops dem digitalisierten Signal als geringwertigstes Bit (LSB-Lowest-Significant-Bit) hinzugeführt wird.

Die Meßimpulsbewertung bzw. die hierfür erforderliche Baugruppe ermöglicht eine Überprüfung auf fehlerfreie Meßwerteerfassung je Kanal, wobei Prüfkriterien die Impulsform, die Impulsamplitude, die Impulsbreite und/oder das Auftreten von Mehrfachimpulsen sind.

Die über die Look-Up-Tabellen korrigierten Signale gelangen auf eine Baugruppe zur Signalzusammenführung.
In dieser Baugruppe wird eine Addition und Mittelung der vom Kanalcontroller freigegebenen fehlerfreien bzw. als günstig ermittelten Meßkanäle vorgenommen. Unter Signalmittelung wird eine Teilung durch die Anzahl der selektierten Kanäle verstanden. Ziel ist es, den Fall auszuschließen, daß ein fehlerbehafteter Kanal die Messung beeinflußt. Bei Messung mit mehreren Kanälen werden durch die Lichtfleckgeometrie bedingte Fehler an optischen Kanten, d.h. Kontrastunterschiede und Körperkanten kompensiert. Gleichzeitig wird die zum Datenausgang zu übertragende Datenmenge reduziert.

Ergänzend besteht gemäß Fig. 3 die Möglichkeit, die Meßwertaufnahme über Analog-Digital-Wandler zu gestalten und zusätzlich einen Microcontroller (CPU) vorzusehen.

Bei der Anordnung gemäß Fig. 3 wirkt die zentrale Steuerung als Master und die CPU als Slave, so daß sich eine Arbeitsweise im Master-Slave-Verfahren einstellt. Von der CPU werden in Abhängigkeit von der jeweiligen Leistung die Aufgabe Meßimpulsbewertung, Fehlerdetektion, Look-Up-Tabelle zur Kanalkorrektur, Subpixelerkennung, Signalzusammenführung, Autofokusansteuerung und/oder Mittelwertbildung vorgenommen.

Im Vergleich zur Lösung nach Fig. 2 wird beim Vorhandensein einer CPU der zentralen Steuerung die Aufgabe zugewiesen, eine Organisation und Kontrolle des Zugriffs auf den Adreß- und Datenbus im Timesharing-Verfahren vorzunehmen und eine Koordinierung der externen Meßtakte mit den Zeitabläufen innerhalb des Meßkopfes und der CPU zu gestalten.

Die vorgesehenen Analog-Ditigal-Wandler führen eine Signalwandlung dann durch, wenn eine programmierte Abtastschwelle überschritten wird, so daß eine wirksame Rauschunterdrückung gegeben ist.

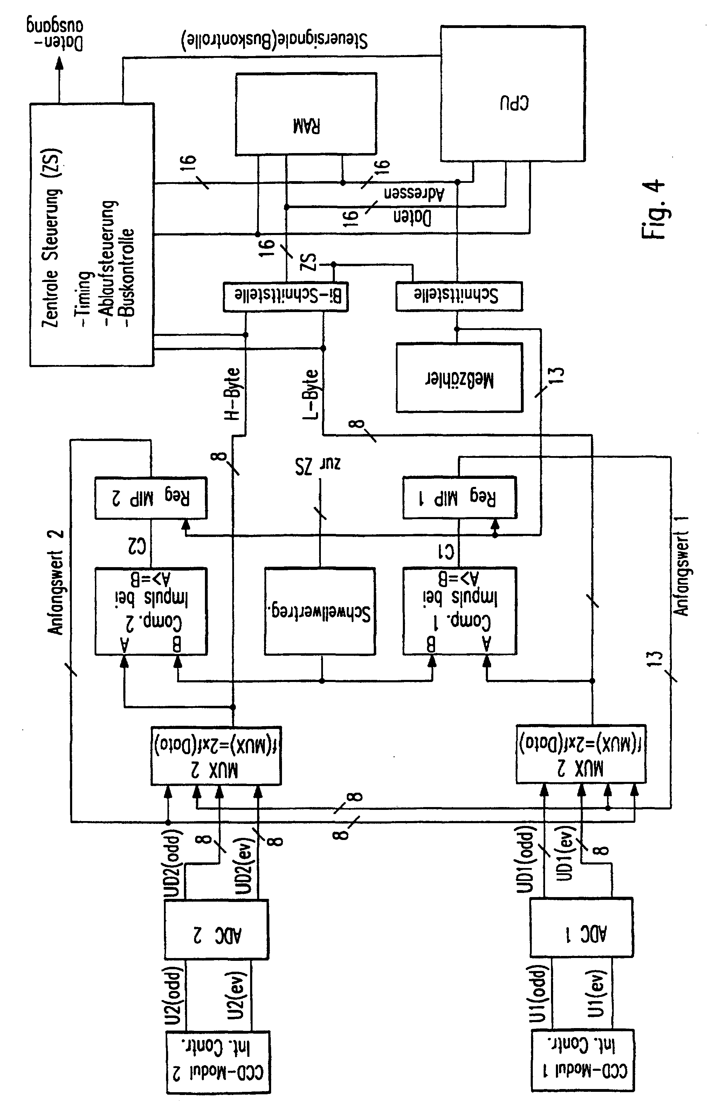

Die Datenaufnahme und der Datentransfer hin zum RAM unter Rückgriff auf die CPU und die zentrale Steuerung ist in der Fig. 4 näher dargestellt.

Der Datentransfer wird so gestaltet, daß eine Reduzierung der CPU-Operationszeiten möglich wird. Dies erfolgt durch Erzeugung von Impulsflankenwerten für die Meßimpulse der Kanäle sowie deren Ablage in definierten Adreßbereichen nach Abschluß des jeweiligen CCD-Transporttaktzyklus bzw. der entsprechenden Transporttaktzyklen.

Die Bildung der Meßwerte (Impulslokalisierung) wird unter Hinweis auf Fig. 4 wie folgt realisiert. Die von den CCD-Sensoren erzeugten Pixelmeßwerte werden digitalisiert über einen MUX gesplittet und durch den Meßzähler adressiert in den RAM transferiert. Übersteigt ein digitaler Pixelwert dem im Schwellwertregister programmierten Wert, wird am Komparator COMP (1 bzw. 2) eine Impulsflanke gebildet, welche wiederum bewirkt, daß der zu diesem Zeitpunkt am Register MIP anliegende aktuelle Meßzählerwert von diesem Register gespeichert wird. Dieser Wert wird jeweils am Ende einer CCD-Sensor-Meßperiode mit Hilfe einer Selektroutine der Zentralen Steuerung und des Meßzählers in einen festen RAM Speicherbereich geschrieben. Für die CPU schnell abfragbar dient dieser Wert als Basisadresse für den dann in der CPU zu bewertenden programmierbaren Meßimpulsbereich. Zugleich stellt diese Basisadresse einen Anfangsmeßwert für die danach von der CPU folgende Impulslokalisierung dar. Die in diesem Speicherbereich liegenden Werte werden von der CPU nach Impulsform, -flanke, -amplitude, -breite bewertet und aus ihnen ein in Pixelrichtung liegender Flächenschwerpunkt berechnet. Anfangswert und dieser Flächenschwerpunktswert werden addiert und bilden den für einen Kanal relevanten Meßwert.

## Patentansprüche

1. Verfahren zur hochpräzisen optischen Distanzmessung mittels einer regelbaren Punktlichtquelle und mehrkanaligen CCD-Sensoranordnungen auf der Basis optischer Triangulation und punktweiser Abtastung, insbesondere zum berührungslosen Vermessen von dreidimensionalen Objekten,
**gekennzeichnet durch**
eine simultane zentralgesteuerte Erfassung von Meßwerten eines Meßpunktes in zwei oder mehreren Kanälen, wobei diese Meßwerte **durch** Meßimpulse beschrieben sind, die einen vorgebbaren Schwellwert überschreiten und in der die ebenfalls vorgebbare Umgebung dieses Schwellwertes den Meßimpuls angeben; weiterhin diese Meßimpule einer Impulsbewertung hinsichtlich Impulsform, -amplitude, -breite und/oder Mehrfachimpulsen unterzogen werden, hieraus korrigierte Meßwerte oder Fehlersignale gebildet werden, um anschließend nur gegebenen Prüfkriterien entsprechende zusammengeführte und gemittelte Meßdaten zur externen Datenspeicherung und -weiterverarbeitung auszugeben.

2. Verfahren nach Anspruch 1,
**dadurch gekennzeichnet, daß**
zur zeit- und ortssynchronen Punktmessung gemeinsame Steuertakte für die CCD-Sensoranordnungen von einer zentralen Steuereinheit, ausgelöst von externen Impulsen, generiert und bereitgestellt werden, wobei für alle Sensoranordnungen exakt gleiche Bedingungen für die Meßwertaufnahme hinsichtlich der Transfer-, Transport-, Reset-, Integrationstaktzyklen oder dergleichen gegeben sind.

3. Verfahren nach Anspruch 1 oder 2,
**dadurch gekennzeichnet, daß**
zur zeit- und ortssynchronen Punktmessung ein gemeinsamer Steuertakt für die CCD-Sensoranordnungen von einer zentralen Steuereinheit, abgeleitet von externen Impulsen, generiert und bereitgestellt wird, wobei erst nach Ablauf einer konstant zu haltenden Integrationszeit ein Transferimpuls für die CCD-Sensoranordnungen und die darauf folgende Integrationszeitroutine ausgelöst wird.

4. Verfahren nach Anspruch 1 oder 2,
**dadurch gekennzeichnet, daß**
bei Ausfall der extern generierten Impulse oder Überschreitung von Impulszykluszeiten auf eine interne Taktung der CCD-Sensoranordnungen umgeschaltet wird.

5. Verfahren nach einem der vorangegangenen Ansprüche,
**gekennzeichnet durch**
eine Regelung der Leistung der Punktlichtquelle, wobei pro CCD-Sensoranordnungskanal Komparatoren zum Vergleich mit einer oberen und unteren Leistungsschwelle vorgesehen sind und die jeweiligen Vergleichsdaten in je ein getaktetes Register abgespeichert werden, wobei weiterhin ausgangsseitig der Register eine Logikbaugruppe ein Aufwärts-, Abwärts- oder Stopsignal für einen Zähler bildet, welcher mit vorgegebener, vorzugsweise nichtlinearer Schrittfolge ein Regelsignal bereitstellt.

6. Verfahren nach Anspruch 5,
**dadurch gekennzeichnet, daß**
die Schrittfolge eine logarithmische oder Exponentialfunktion ist.

7. Verfahren nach Anspruch 5 oder 6,
**dadurch gekennzeichnet, daß**
der Registertakt von der CCD-Taktung bzw. den CCD-Taktsignalen abgeleitet wird.

8. Verfahren nach Anspruch 4, 6 oder 7,
**dadurch gekennzeichnet, daß**
mittels eines Multiplexers wahlweise die Lichtleistungsregelung, die Vorgabe eines externen, steuerbaren Lichtwertes oder eines festen Niedrigenergiewertes ermöglicht wird.

9. Verfahren nach einem der vorangegangenen Ansprüche,
**dadurch gekennzeichnet, daß**
über eine Kanalcontoller-Baugruppe kritische Meßkanäle nach Analyse der Meßdaten ausgeblendet oder für die Lichtleistungsregelung nicht in Betracht gezogen werden.

10. Verfahren nach einem der vorangegangenen Ansprüche, **gekennzeichnet durch**
eine Korrektur und Linearisierung der Meßdaten **durch** Auslesen zuordenbarer Werte mittels einer Look-Up-Tabelle.

11. Verfahren nach Anspruch 1 oder 2,
**dadurch gekennzeichnet, daß**
die zentrale Steuereinheit mit einem Microcontroller (CPU) in Master-Slave-Anordnung wechselwirkt, wobei durch den Microcontroller mindestens Teile der Impulsbewertung und -lokalisierung durchgeführt werden.

12. Verfahren nach Anspruch 11,
**dadurch gekennzeichnet, daß**
nach Überschreiten eines vorgegebenen, programmierbaren Schwellwerts ein CCD-Zeilen lokaler Wert gebildet wird, dessen festlegbare Umgebung über eine Datentransfereinheit dem Microcontroller zur Verarbeitung zugeführt wird.

13. Verfahren nach Anspruch 12.
**dadurch gekennzeichnet, daß**
mittels der Datentransfereinheiten eine speicherplatzreduzierende und die Microcontroller-Operationszeiten senkende Meßimpulslokalisierung vorgenommen wird.

14. Verfahren nach einem der vorangegangenen Ansprüche.
**dadurch gekennzeichnet, daß** dem digitalisierten Ausgabemeßwert
entsprechend der Anzahl der Meßkanäle Markierungsbits, gebildet mittels Kanalcontroller und Microcontroller hinzugefügt werden, wobei die Bits kennzeichnen, welcher Kanal an der Meßwertbildung beteiligt war, und Fehlerbits angeben, wenn Kanal- und Microcontroller alle Kanäle als kritisch bewerten.

15. Verfahren nach einem der vorangegangenen Ansprüche,
**gekennzeichnet durch**
eine Punktlichtquellen-Autofocussteuerung, welche eine dynamische Fokussierung meßwertunabhängig vornimmt.

## Claims

1. A method for high precision optical distance measurement by means of an adjustable point light source and multi-channel CCD sensor arrays based on optical triangulation and point-by-point scanning, in particular for contactless measurement of three-dimensional objects,
**characterised by**
a simultaneous, centrally controlled collection of measuring values of a measurement point in two or more channels, with these measuring values being described by measuring pulses which exceed a specifiable threshold value and indicate the measuring pulse within the environment of this threshold value, which is also specifiable; wherein these measuring pulses are further subjected to a pulse evaluation with respect to pulse shape, pulse amplitude, pulse width, and/or multiple pulses, corrected measuring values or error signals are generated thereof in order to subsequently output only combined and averaged measuring data which conforms to given test criteria for an external data storage and further processing.

2. The method according to Claim 1,
**characterised in that**
common control clocks for the CCD sensor arrays, triggered by external pulses, are generated and provided by a central control unit for the time and location synchronous point measurement, with exactly the same conditions for measuring value sensing with respect to the transfer, transport, reset, integration clock cycles, and the like being given for all sensor arrays.

3. The method according to Claim 1 or 2,
**characterised in that**
a common control clock for the CCD sensor arrays, derived from external pulses, is generated and provided by a central control unit for the time and location synchronous point measurement, with a transfer pulse being triggered for the CCD sensor arrays and the subsequent integration time routine only after an integration time to be maintained constant has elapsed.

4. The method according to Claim 1 or 2,
**characterised in that**
upon a failure of the externally generated pulses or upon exceeding the pulse cycle times, a changeover to an internal clock of the CCD sensor arrays takes place.

5. The method according to one of the previous claims,
**characterised by**
a power regulation of the point light source, with comparators being provided for each CCD sensor array channel for a comparison with an upper and a lower power threshold, and the respective comparison data being stored in a clocked register each, further, wherein a logic arrangement at the output side of the registers forms an upward, downward, or stop signal for a counter which provides a control signal in a specified preferably non-linear step sequence.

6. The method according to Claim 1,
**characterised in that**
the step sequence is a logarithmic or exponential function.

7. The method according to Claim 5 or 6,
**characterised in that**
the register clock is derived from the CCD clock or the CCD clock signals, respectively.

8. The method according to Claim 4, 6 or 7,
**characterised in that**
the light output regulation, the specification of an external controllable light value, or a fixed low-energy value is selectively enabled by means of a multiplexer.

9. The method according to one of the previous claims,
**characterised in that**
critical measuring channels are blanked out via a channel controller arrangement after the analysis of the measuring data or are not taken into consideration for the light output regulation.

10. The method according to one of the previous daims,
**characterised by**
a correction and linearisation of the measuring data by reading out allocatable values by means of a look-up table.

11. The method according to Claim 1 or 2,
**characterised in that**
the central control unit is in an interactive relation with a microcontroller (CPU) in a master-slave arrangement, with the microcontroller performing at least portions of the pulse evaluation and localisation.

12. The method according to Claim 11,
**characterised in that**
upon exceeding a specified programmable threshold value, a CCD line local value is formed whose specifiable environment is supplied to the microcontroller via a data transfer unit for processing.

13. The method according to Claim 12,
**characterised in that**
a memory location reducing and microcontroller operation time decreasing measuring pulse localisation is carried out by means of the data transfer units.

14. The method according to one of the previous claims,
**characterised in that**
flag bits formed by means of the channel controller and the microcontroller are added to the digitised output measuring value according to the number of measuring channels, with the bits identifying which channel was involved in the formation of the measuring value, and error bits indicate if the channel controller and the microcontroller evaluate all channels as critical.

15. The method according to one of the previous claims,
**characterised by**
a point light source autofocus control which performs a dynamic focussing independent of the measuring value.

## Revendications

1. Procédé optique de mesure de distance à haute précision au moyen d'une source de lumière ponctuelle réglable et d'agencements de capteurs à couplage de charge CCD à multiples canaux, sur la base de triangulation optique et de balayage ponctuel, en particulier pour mesurer sans contact des objets tridimensionnels,
**caractérisé par** une saisie simultanée et à commande centrale de valeurs de mesure d'un point de mesure dans deux ou plusieurs canaux, ces valeurs de mesure étant décrites par des impulsions de mesure qui dépassent une valeur seuil prédéterminée et dans lesquelles l'environnement également prédéterminé de cette valeur seuil indique l'impulsion de mesure, ces impulsions de mesure étant en outre soumises à une évaluation d'impulsions du point de vue de la forme, de l'amplitude, de la largeur et/ou d'impulsions multiples, et des valeurs mesurées corrigées ou des signaux d'erreurs étant formé(e)s à partir de celles-ci pour fournir ensuite seulement des données de valeurs regroupées et moyennées, correspondant à des critères de vérification donnés pour effectuer un stockage et un traitement de données externes.

2. Procédé selon la revendication 1, **caractérisé en ce que** pour effectuer une mesure ponctuelle synchrone localement et dans le temps, des cadences de commande communes pour les capteurs CCD sont engendrées et fournies par une unité de commande centrale, déclenchées par des impulsions externes, et pour tous les capteurs, exactement les mêmes conditions sont données pour l'enregistrement de valeurs de mesure en ce qui concerne les cycles de cadence de transfert, de transport, de remise à zéro et d'intégration ou similaires.

3. Procédé selon l'une ou l'autre des revendications 1 et 2, **caractérisé en ce que** pour effectuer une mesure ponctuelle synchrone localement et dans le temps, une cadence de commande commune pour les agencements de capteurs CCD est engendrée et fournie par une unité de commande centrale, dérivée d'impulsions externes, et seulement après expiration d'un temps d'intégration à maintenir constant, une impulsion de transfert est déclenchée pour les agencements de capteurs CCD et pour la routine d'intégration temporelle qui fait suite.

4. Procédé selon l'une ou l'autre des revendications 1 et 2, **caractérisé en ce qu'**en cas de défaut des impulsions engendrées depuis l'extérieur ou en cas de dépassement de temps de cycles d'impulsions, on effectue une commutation sur une cadence interne des agencements de capteurs CCD.

5. Procédé selon l'une des revendications précédentes, **caractérisé par** une régulation de la puissance de la source de lumière, dans laquelle il est prévu pour chaque canal de l'agencement de capteurs CCD des comparateurs pour faire une comparaison avec un seuil de puissance supérieur et un seuil de puissance inférieur, et les données de comparaison respectives sont stockées chacune dans un registre cadencé, et côté sortie des registres, un ensemble logique formant encore un signal ascendant, un signal descendant et un signal d'arrêt pour un compteur qui fournit un signal de régulation avec une séquence d'étapes prédéterminée, de préférence non linéaire.

6. Procédé selon la revendication 5, **caractérisé en ce que** la séquence d'étapes est une fonction logarithmique ou exponentielle.

7. Procédé selon l'une ou l'autre des revendications 5 et 6, **caractérisé en ce que** la cadence de registre est dérivée de la cadence CCD ou des signaux de cadence CCD, respectivement.

8. Procédé selon la revendication 4, 6 ou 7, **caractérisé en ce qu'**un multiplexeur permet au choix la régulation de la puissance lumineuse, la détermination d'une valeur lumineuse externe commandable ou d'une valeur énergétique faible fixe.

9. Procédé selon l'une des revendications précédentes, **caractérisé en ce que** via un ensemble de commande de canal, des canaux de mesure critiques sont supprimés après analyse des données de mesure ou ne sont pas pris en considération pour la régulation de la puissance lumineuse.

10. Procédé selon l'une des revendications précédentes, **caractérisé par** une correction et une linéarisation des données de mesure par la lecture de valeurs attribuables au moyen d'une table de consultation.

11. Procédé selon l'une ou l'autre des revendications 1 et 2, **caractérisé en ce que** l'unité de commande centrale coopère avec une unité de microcommande (UCT) en agencement maître/esclave, au moins des parties de l'analyse et de la localisation d'impulsions étant effectuée par cette unité de microcommande.

12. Procédé selon la revendication 11, **caractérisé en ce qu'**après avoir dépassé une valeur seuil prédéterminée programmable, on forme une valeur locale de lignes CCD, dont l'environnement fixable est amené pour le traitement à l'unité de microcommande via une unité de transfert de données.

13. Procédé selon la revendication 12, **caractérisé en ce qu'**au moyen des unités de transfert de données est effectuée une localisation d'impulsions de mesure réduisant la place prise en mémoire et abaissant les temps opérationnels de l'unité de microcommande.

14. Procédé selon l'une des revendications précédentes, **caractérisé en ce que** des bits de marquage, formés au moyen de l'unité de commande de canal et de l'unité de microcommande et selon le nombre de canaux de mesure, sont ajoutés à la valeur de mesure de sortie numérisée, les bits signalant quel canal avait participé à la formation de la valeur de mesure et les bits d'erreurs indiquant quand l'unité de commande de canal et l'unité de microcommande évaluent tous les canaux comme étant critiques.

15. Procédé selon l'une des revendications précédentes, **caractérisé par** une commande à autofocalisation de source de lumière ponctuelle qui effectue une focalisation dynamique indépendamment de la valeur de mesure.
